# EUROPÄISCHE PATENTSCHRIFT

(11) **EP 2 878 053 B1**
(45) Veröffentlichungstag und Bekanntmachung des Hinweises auf die Patenterteilung: **03.10.2018**
(21) Anmeldenummer: 13742399.2
(22) Anmeldetag: 25.07.2013
(51) Int. Cl.: H02B 1/052, H02B 1/20, H02B 1/32

(54) **MONTAGESYSTEM FÜR DIE ANORDNUNG VON BEISPIELSWEISE ELEKTRISCHEN EINRICHTUNGEN INSBESONDERE IN SCHALTSCHRÄNKEN**
ASSEMBLY SYSTEM FOR THE MOUNTING OF ELECTRICAL DEVICES IN ELECTRICAL CABINETS
SYSTÈME D'ASSEMBLAGE POUR LE MONTAGE D'ÉQUIPEMENTS ÉLECTRIQUES EN PARTICULIER DANS DES ARMOIRES ÉLECTRIQUES

(30) Priorität: 25.07.2012 DE 102012014979
(43) Veröffentlichungstag der Anmeldung: 03.06.2015
(73) Patentinhaber: Friedrich Lütze GmbH, 71366 Weinstadt-Gro Heppach (DE)
(72) Erfinder: LÜTZE, Udo, 71394 Kernen-Stetten (DE); LANG, Jürgen, 71640 Ludwigsburg (DE); GHIZELEA, Virgil, 70372 Stuttgart (DE)
(74) Vertreter: Bartels und Partner, Patentanwälte
(86) Internationale Anmeldenummer: PCT/EP2013/002211
(87) Internationale Veröffentlichungsnummer: WO 2014/015989

(56) Entgegenhaltungen:
- EP-A1- 0 109 881
- EP-A2- 2 400 610
- DE-A1- 10 350 465
- JP-U- S5 978 819

## Beschreibung

Die Erfindung betrifft ein Montagesystem für die Anordnung von beispielsweise elektrischen Einrichtungen insbesondere in Schaltschränken mit den Merkmalen im Oberbegriff von Anspruch 1.

In der industriellen Steuerungstechnik werden elektrische Geräte häufig in Schaltschränken oder Schaltkästen angeordnet. Die einzelnen Einrichtungen werden auf Tragschienen wie beispielsweise einer Hutschiene angeordnet und können aneinander gereiht werden. Anschließend werden die Einrichtungen verdrahtet, wobei ein kammartiges Ordnungsmittel an dem die Tragschiene aufweisenden Montagesteg angebracht ist, um die Verbindungsleitungen der Einrichtungen zu ordnen. Ein zugehöriges Montagesystem wird von der Anmelderin Friedrich Lütze GmbH in 71384 Weinstadt angeboten und ist beispielsweise aus der DE 199 08 350 A1, der DE 103 50 465 A1, der DE 20 2010 011 620 U1 oder auch der DE 20 2008 015 309 U1 bekannt.

Die DE 198 59 606 A1 zeigt eine Schnell-Montage-Verdrahtungssystem bestehend aus einem Traggerüst für die Gerätebefestigung und auf das Traggerüst befestigbare Geräteinseln mit hutschienenartigen Montageschienen.

Die EP 0 109 881 A1 beschreibt ein Montagesystem für die Anordnung von beispielsweise elektrischen Einrichtungen in Schaltschränken, wobei das Montagesystem mindestens einen vorzugsweise horizontal verlaufenden Montagesteg aufweist, an dessen Vorderseite mindestens eine Einrichtung anbringbar ist, wobei der Montagesteg auf seiner der anbringbaren Einrichtung gegenüberliegenden Rückseite mindestens einen sich in Längsrichtung des Montagesteges erstreckenden Raststeg aufweist, auf den eine weitere Komponente des Montagesystems unmittelbar aufrastbar oder mittelbar unter Verwendung eines aufrastbaren Adapterelements festlegbar ist, wobei das Montagesystem eine erste weitere Komponente zum Bündeln von auf der Rückseite des Montagesteges verlaufenden Verbindungsleitungen der auf der Vorderseite angeordneten Einrichtung umfasst, und wobei die erste weitere Komponente einstückig sowohl einen auf den Raststeg aufrastbaren Verbindungsabschnitt als auch mindestens eine Bündelkammer für die Aufnahme der Verbindungsleitungen aufweist.

Weitere Montagesysteme gehen aus der JP S59-78819 und der EP 2 400 610 A2 hervor.

Der vorliegenden Erfindung liegt die Aufgabe zugrunde, ein neues Montagesystem bereitzustellen, das verbesserte Gebrauchseigenschaften aufweist, insbesondere vielseitig einsetzbar ist und dabei dennoch einfach in der Handhabung und Montage ist. In einer Ausführungsart soll der zur Verfügung stehende Montageraum auf einfache Weise noch besser nutzbar sein. Die Aufgabe ist durch das im Anspruch 1 bestimmte Montagesystem gelöst. Besondere Ausführungsarten der Erfindung sind in den Unteransprüchen bestimmt.

Gemäß dem Kennzeichen von Anspruch 1 ist vorgesehen, dass die erste weitere Komponente einstückig mehrere Bündelkammern zum Bündeln von auf der Rückseite des Montagesteges verlaufenden Verbindungsleitungen aufweist, und dass die Bündelkammern symmetrisch zu einer Symmetrieebene des Montagesteges angeordnet sind.

In einer Ausführungsart weist das Montagesystem mindestens einen vorzugsweise horizontal verlaufenden Montagesteg auf, an dem mindestens eine Einrichtung anbringbar ist. Der Montagesteg weist fakultativ eine vorzugsweise einstückig ausgebildete Tragschiene auf, an der die Einrichtung lösbar festlegbar ist, beispielsweise eine genormte oder eine einer Norm im Wesentlichen entsprechenden Hutschiene. Es können ein oder mehrere Montagestege an einer Trageinrichtung, insbesondere an rechtwinklig zu den Montagestegen und vorzugsweise vertikal verlaufenden Profilstäben festlegbar sein und einen Montagerahmen bilden, der vormontierbar ist und anschließend beispielsweise in einen Schaltschrank einsetzbar ist.

Der Montagesteg weist auf seiner der anbringbaren Einrichtung und gegebenenfalls der Tragschiene gegenüberliegenden Rückseite mindestens einen sich in Längsrichtung des Montagesteges erstreckenden Raststeg auf, auf den weitere Komponenten des Montagesystems wie beispielsweise ein Kabelbündelelement unmittelbar aufrastbar oder mittelbar unter Verwendung eines aufrastbaren Adapterelements festlegbar sind. Beispielsweise können auf diese Weise auf der Rückseite des Montagesteges Kabelhalter anbringbar sein, mittels denen die Verbindungsleitungen der auf der Vorderseite des Montagesteges angebrachten Einrichtungen auf der Rückseite geführt werden.

Das Aufrasten kann lösbar sein, insbesondere werkzeuglos lösbar sein, oder lediglich mit einem Werkzeug lösbar, oder auch unlösbar sein. Unterschiedliche weitere Komponenten des Montagesystems können diesbezüglich unterschiedlich ausgebildet sein. So können beispielsweise unmittelbar auf den Raststeg aufrastbare Komponenten wie Kabelhalter werkzeuglos lösbar sein, wohingegen beispielsweise Adapterelemente unlösbar oder jedenfalls nur mit einem Werkzeug lösbar auf den Raststeg aufrastbar sein können.

Der Montagesteg kann die Tragschiene auf der Vorderseite und/oder den Raststeg auf der Rückseite einstückig ausbilden. Der Montagesteg kann durch einen abgelängten Profilstab gebildet sein und beispielsweise aus Aluminium oder einer aluminiumhaltigen Legierung hergestellt sein.

In einer Ausführungsart weist der Raststeg eine selbsthemmende Rastkante auf, insbesondere eine Rastkante mit einem Hinterschnitt. Dadurch ist insbesondere ein unbeabsichtigtes Lösen der an dem Raststeg angebrachten Komponenten des Montagesystems zuverlässig verhindert.

In einer Ausführungsart weist der Montagesteg zwei lateral in Bezug auf die Längsachse des Montagesteges voneinander beabstandete, aber parallel zueinander verlaufende Raststege auf, auf welche die weitere Komponente des Montagesystems oder das Adapterelement klammerartig aufrastbar ist. Die beiden Raststege können ebenso wie die Tragschiene auf der Vorderseite symmetrisch zu einer Mittelebene ausgebildet sein, die auch eine Symmetrieebene für den gesamten Montagesteg bilden kann.

Die erste weitere Komponente kann als Spritzgussteil individuell hergestellt sein oder alternativ abgelängt sein von einem Profilstab. Die erste weitere Komponente kann aus Kunststoff hergestellt sein.

In einer Ausführungsart ist die Bündelkammer durch mindestens einen federelastischen auslenkbaren Schenkel begrenzt, durch dessen Auslenkung Verbindungsleitungen in die Bündelkammer einführbar sind. Die Bündelkammer kann im Querschnitt im Wesentlichen rechtwinklig oder quadratisch sein mit vorzugsweise abgerundeten Ecken bzw. Kanten. Der auslenkbare Schenkel kann an einer Seite der Bündelkammer angeordnet sein, welche an die den Verbindungsabschnitt zum Aufrasten an den Raststeg aufweisenden Seite der Bündelkammer anschließt.

Die Bündelkammern können eine überstimmende Größe aufweisen. Die Trennwand der Bündelkammern kann parallel zu der Symmetrieebene des Montagesteges verlaufen. Dadurch können die im montierten Zustand der ersten weiteren Komponente über die Oberseite bzw. die Unterseite des Montagesteges auf die Rückseite durchgeführten Verbindungsleitungen in getrennten Bündelkammern der ersten weiteren Komponente geführt werden.

In einer Ausführungsart weist das Montagesystem ein Adapterelement auf, das auf den Raststeg aufrastbar ist und das eine mechanische Schnittstelle für das Anbringen weiterer Komponenten des Montagesystems auf der Rückseite des Montagesteges aufweist. Beispielsweise kann das Adapterelement Bohrungen für Verbindungsmittel aufweisen, mittels denen das Adapterelement mit weiteren Komponenten des Montagesystems verbindbar ist, beispielsweise mit einem Kabelkanal oder mit einer Plattform für eine Kabelschelle. Das Adapterelement kann beispielsweise durch eine metallische Klammer gebildet sein, deren Eigensteifigkeit oder Klammerform derart ist, dass das Adapterelement jedenfalls werkzeuglos nicht lösbar ist. Beispielsweise kann das Adapterelement in einen Hinterschnitt des Raststeges eingreifen.

In einer Ausführungsart ist zwischen dem Adapterelement und dem Raststeg ein Aufnahmeraum gebildet für die Aufnahme eines Befestigungsmittels zum Befestigen einer weiteren Komponente des Montagesystems an dem Adapterelement. Der Aufnahmeraum kann entweder durch die Form des Adapterelements gebildet sein und/oder durch die Form des Raststeges.

Bei den an dem Montagesteg festlegbaren Einrichtungen kann es sich beispielsweise um elektrische Einrichtungen handeln, etwa Stromversorgungen, Sicherungen, Steuerungen, Ein-/Ausgabe-Baugruppen, Schnittstelleneinheiten, Temperaturwandler, Analog/Digital-Wandler oder dergleichen. Alternativ oder ergänzend kann die Vorrichtung auch nicht-elektrische Komponenten aufweisen, beispielsweise optische Komponenten oder pneumatische Komponenten.

Weitere Vorteile, Merkmale und Einzelheiten der Erfindung ergeben sich aus den Unteransprüchen und der nachfolgenden Beschreibung, in der unter Bezugnahme auf die Zeichnungen mehrere Ausführungsbeispiele im Einzelnen beschrieben sind.
- Fig. 1: zeigt eine perspektivische Ansicht auf ein Ausführungsbeispiel eines Montagesystems;
- Fig. 2: zeigt einen Montagesteg in vergrößerter Darstellung;
- Fig. 3: zeigt ein Beispiel eines ersten Ordnungsmittels;
- Fig. 4: zeigt eine perspektivische Ansicht auf einen Montagesteg mit einem eingesetzten Ordnungsmittel;
- Fig. 5: zeigt den Montagesteg der Fig. 4 mit einem ausgetauschten Ordnungssegment;
- Fig. 6: zeigt eine Ansicht auf ein weiteres Ordnungssegment;
- Fig. 7: zeigt einen Schnitt durch einen Montagesteg mit dem daran festgelegten Ordnungssegment der Fig. 6;
- Fig. 8: zeigt in vergrößerter Darstellung einen Ausschnitt aus der Fig. 7;
- Fig. 9: zeigt eine Ansicht auf ein weiteres Ordnungssegment;
- Fig. 10: zeigt einen Schnitt durch einen Montagesteg mit dem daran festgelegten Ordnungssegment der Fig. 9;
- Fig. 11: zeigt in vergrößerter Darstellung einen Ausschnitt aus der Fig. 10;
- Fig. 12: zeigt eine Ansicht auf eine weitere Komponente;
- Fig. 13: zeigt einen Schnitt durch einen Montagesteg mit der daran festgelegten weiteren Komponente der Fig. 12;
- Fig. 14: zeigt in vergrößerter Darstellung einen Ausschnitt aus der Fig. 13;
- Fig. 15: zeigt eine Seitenansicht auf einen Montagesteg nach dem Stand der Technik;
- Fig. 16: zeigt eine Seitenansicht auf eine Schalttafel nach dem Stand der Technik;
- Fig. 17: zeigt eine Seitenansicht auf ein Beispiel eines Montagesteges während des Anbringens einer Einrichtung;
- Fig. 18: zeigt eine Seitenansicht auf ein Beispiel eines Montagesteges mit daran angebrachter Einrichtung;
- Fig. 19: zeigt eine perspektivische Ansicht auf einen Montagesteg;
- Fig. 20: zeigt eine Seitenansicht auf den Montagesteg der Fig. 19;
- Fig. 21: zeigt einen Ausschnitt aus der Fig. 20 in vergrößerter Darstellung;
- Fig. 22: zeigt eine perspektivische Ansicht auf ein Ende des Montagesteges;
- Fig. 23: zeigt eine Seitenansicht auf den Montagesteg der Fig. 22;
- Fig. 24: zeigt einen Ausschnitt aus der Fig. 23 in vergrößerter Darstellung;
- Fig. 25: zeigt eine perspektivische Ansicht auf die Rückseite des Ausführungsbeispiels des Montagesystems der Fig. 1;
- Fig. 26: zeigt eine Seitenansicht auf einen Montagesteg der Fig. 25;
- Fig. 27: zeigt eine Seitenansicht auf einen Montagesteg mit einem auf die Raststege aufgerasteten Adapterelement;
- Fig. 28: zeigt eine perspektivische Ansicht auf die Rückseite des Montagesteges mit zwei aufgerasteten Adapterelementen;
- Fig. 29: zeigt eine zweite weitere Komponente des Montagesystems;
- Fig. 30: zeigt eine Seitenansicht des Montagesteges mit einem auf der Rückseite mittels Adapterelementen befestigten Kabelkanal;
- Fig. 31: zeigt eine perspektivische Ansicht auf ein weiteres Beispiel eines Montagesystems;
- Fig. 32: zeigt eine Seitenansicht auf ein weiteres Beispiel eines Montagesteges ohne Tragschiene; und
- Fig. 33: zeigt eine Seitenansicht auf ein weiteres Beispiel eines unsymmetrischen Montagesteges.

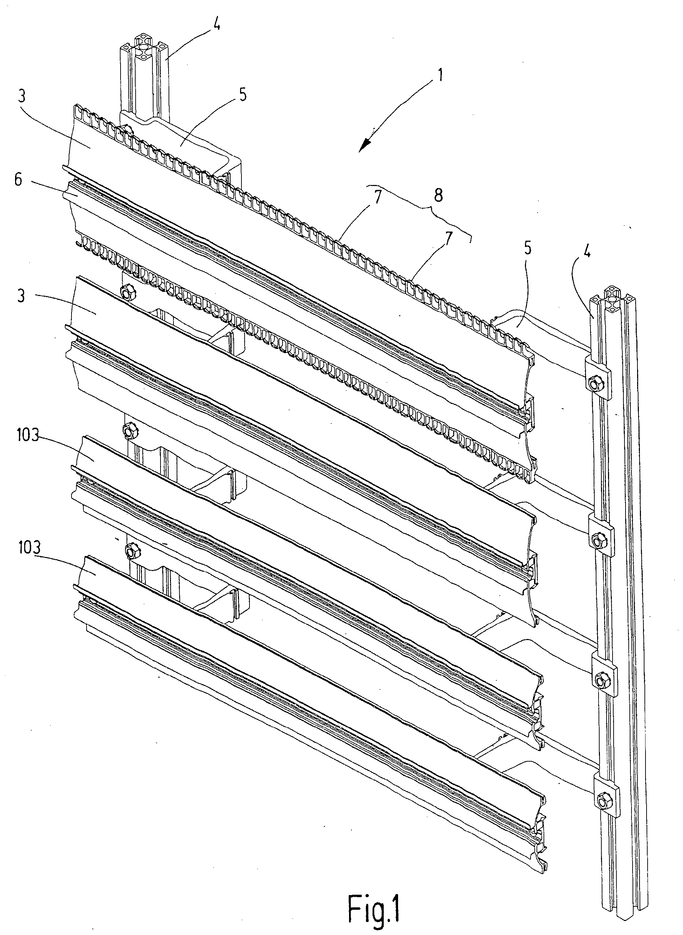

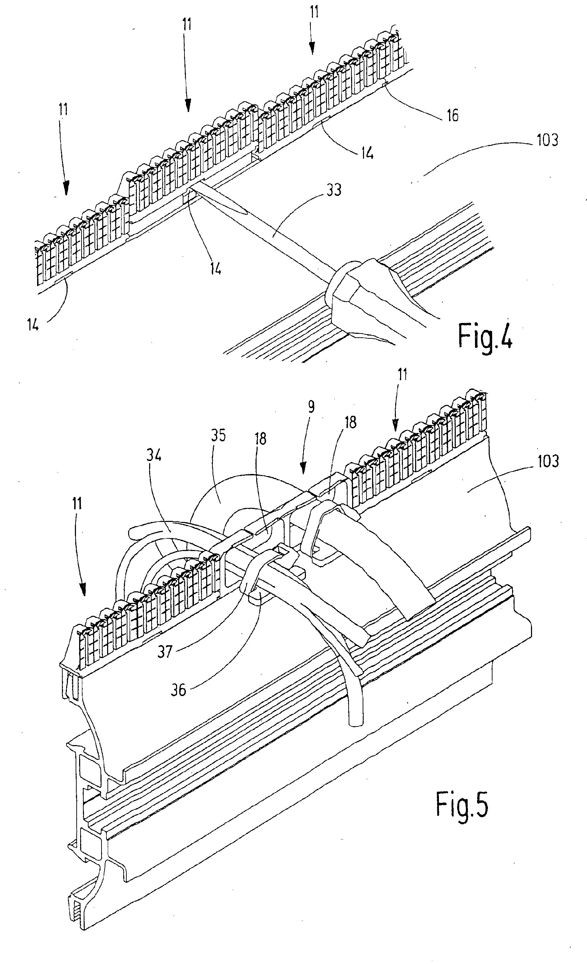

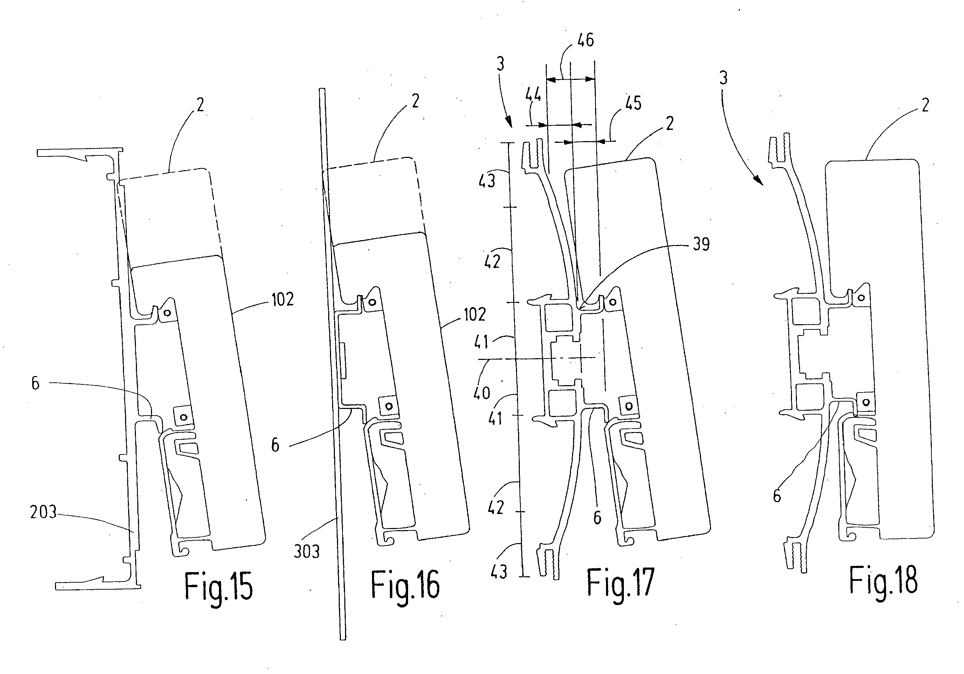

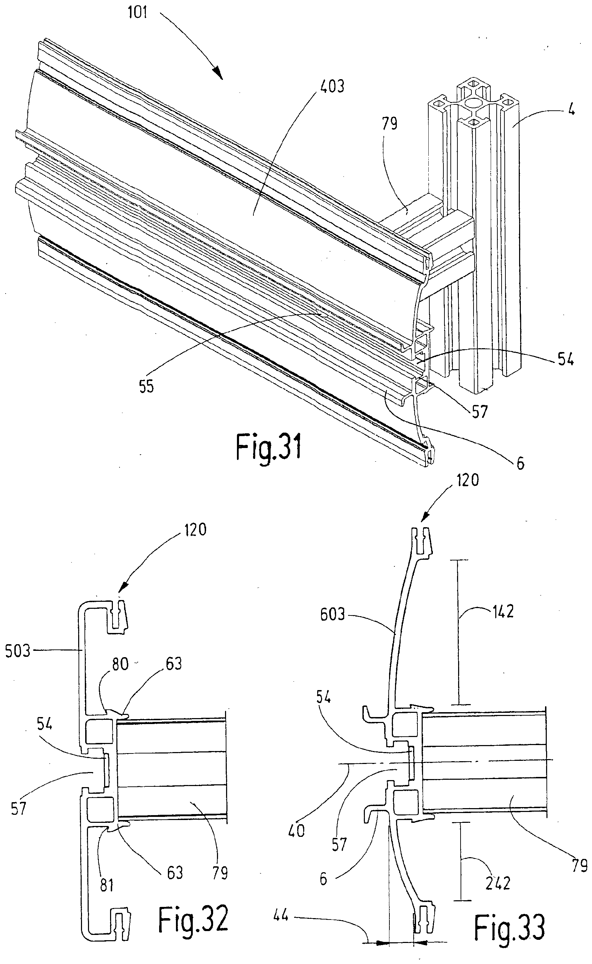

Die Figur 1 zeigt eine perspektivische Ansicht auf ein Ausführungsbeispiel eines Montagesystems 1, das insgesamt vier horizontal verlaufende Montagestege 3, 103 aufweist, an denen jeweils mindestens eine Einrichtung 2 (Fig. 17) anbringbar ist. Die beiden unteren Montagestege 103 weisen eine geringere laterale Erstreckung auf gegenüber den beiden oberen Montagestegen 3. Die Montagestege 3, 103 sind an oder nahe ihren beiden Enden, beispielsweise bis 200 mm und insbesondere bis 125 mm von ihren beiden Enden entfernt, mittels jeweils eines Montagebügels 5 oder einem sonstigen Verbindungselement 79 (Fig. 31) mit jeweils einem vertikal verlaufenden Profilstab 4 verbunden und bilden zusammen mit den Profilstäben 4 einen Montagerahmen, der vormontierbar ist und anschließend in dem in der Fig. 1 dargestellten Zustand oder auch mit bereits daran angebrachten Einrichtungen 2 und deren Verbindungsleitungen 34, 35 (Fig. 5) in einen Schaltschrank einsetzbar ist. Die Montagestege 3, 103 weisen jeweils eine Tragschiene 6 auf, an welcher die Einrichtungen 2 anzubringen sind, im Ausführungsbeispiel eine genormte oder eine einer Norm im Wesentlichen entsprechenden Hutschiene mit einer Höhe der Hutschiene von 7,5 mm.

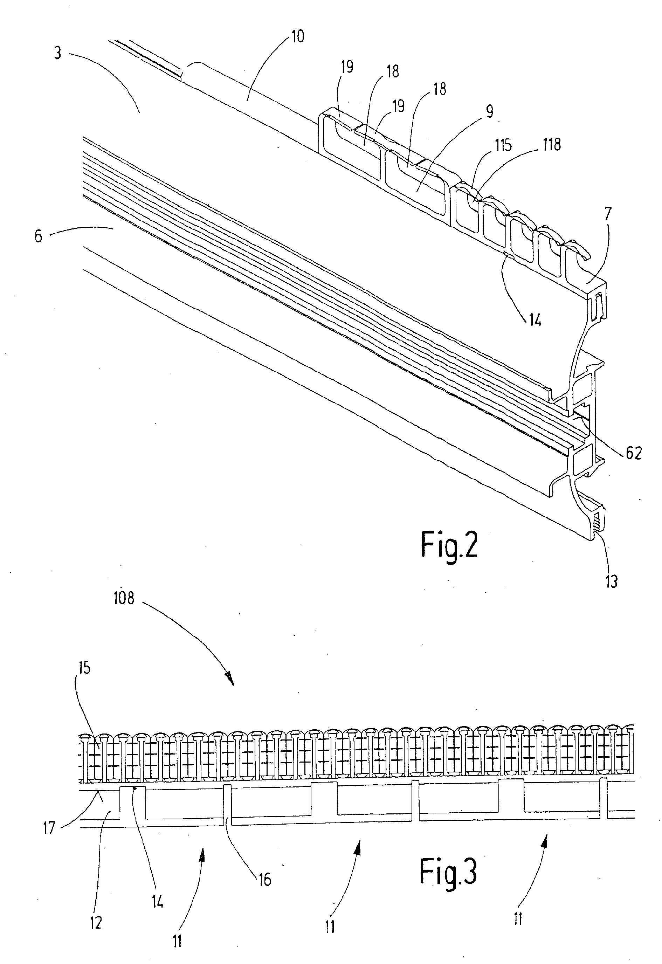

An den Längsrändern des in der Fig. 1 oberen Montagesteges 3 ist jeweils ein Ordnungsmittel 8 angebracht, das aus einer Vielzahl gleichartig ausgebildeter Ordnungssegmente 7 zusammengesetzt ist. Aus dem Ordnungsmittel 8 sind wahlweise einzelne oder mehrere Ordnungssegmente 7 lösbar und von dem Ordnungsmittel 8 bzw. dem Montagesteg 3 unter Zurücklassen einer Lücke entfernbar oder gegen ein anderes Ordnungssegment 9 (Fig. 2), 11 (Fig. 3) oder eine Gruppe von anderen Ordnungssegmenten 9, 11 austauschbar.

Die Fig. 2 zeigt einen Montagesteg 3 in vergrößerter Darstellung. Die Fig. 3 zeigt ein Ordnungsmittel 108, das durch eine Vielzahl einstückig ausgebildeter und hintereinander angeordneter Ordnungssegmente 11 zusammengesetzt ist. Anstelle der einstückigen Ausbildung können die Ordnungssegmente 11 auch an ihren Enden jeweils Verkettungsmittel aufweisen, mittels denen die Ordnungssegmente 11 lösbar miteinander verkettet sind. Das Ordnungsmittel 108 kann in vorgebbaren Längen von beispielsweise etwa 1 m oder 2 m hergestellt sein oder auch endlos hergestellt sein.

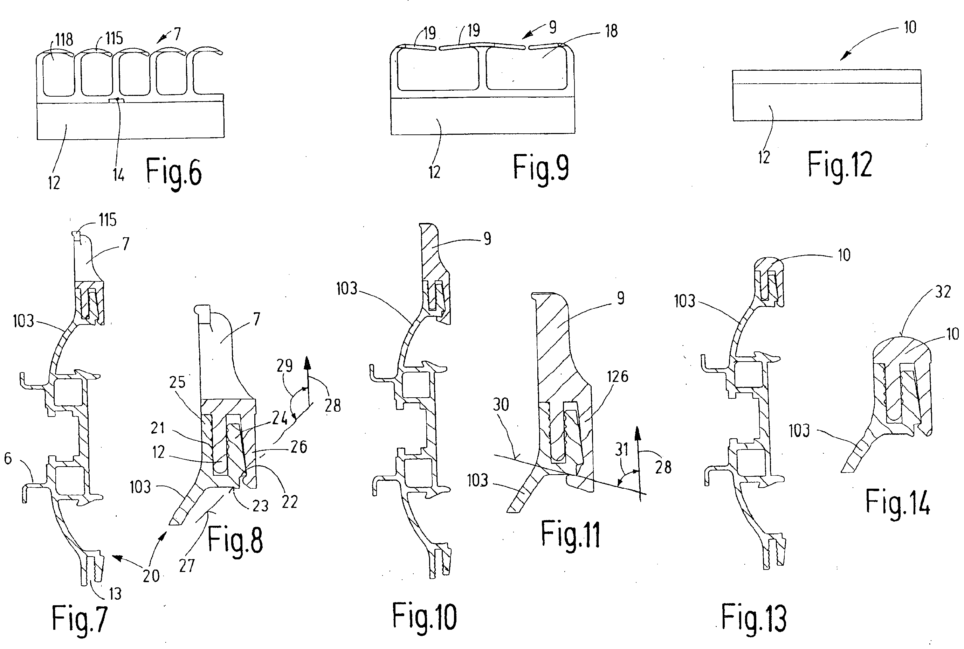

Jedes Ordnungssegment 11 weist einen stegförmigen Festlegeabschnitt 12 auf, der in eine an den Längsrändern des Montagesteges 3 angeordnete und eine Nut 13 (Fig. 7) aufweisende Aufnahmeeinrichtung 20 einsteckbar ist. Mittig in Bezug auf die Längserstreckung ist in den Festlegeabschnitt 12 eine in Einsteckrichtung verlaufende Nut 14 eingebracht, deren eine Werkzeugangriffsfläche bildendes Ende auch im eingesteckten Zustand zugänglich bleibt und in welche ein Werkzeug 33 (Fig. 4) zum Lösen des Ordnungssegments 11 einführbar ist.

Einstückig mit dem Festlegeabschnitt 12 bildet das Ordnungssegment 11 vorzugsweise federelastisch auslenkbare Ordnungselemente 15 aus, zwischen denen Verbindungsleitungen 34, 35 der Einrichtung 2 einsteckbar und dadurch geordnet fixierbar sind. Solltrennstellen 16, an denen die Ordnungssegmente 11 vereinzelt werden können, sind durch Einschnitte in den Festlegeabschnitt 12 gebildet. Die Einschnitte ragen dabei über eine von dem Ordnungssegment 11 gebildete Anschlagkante 17 hinaus, bis zu welcher das Ordnungssegment 11 in die Nut 13 einsteckbar ist. Dadurch ist die Position der Solltrennstelle 16 auch im eingesteckten Zustand sichtbar. Ein Trennschnitt kann aus Richtung der Ordnungselemente 15 erfolgen.

Das Ordnungssegment 9 weist zwei sich jeweils über die halbe Länge des Ordnungssegments 9 erstreckende Aufnahmekammern 18 für die zu ordnenden Verbindungsleitungen 34, 35 auf. Zwei dem Montagesteg 3 bzw. dem Festlegeabschnitt 12 gegenüberliegende Schenkel 19 des Ordnungssegments 9 sind federelastisch auslenkbar zum Einführen der zu ordnenden Verbindungsleitungen 34, 35 in die Aufnahmekammer 18. Demgegenüber weist das Ordnungssegment 7 eine Vielzahl, im Ausführungsbeispiel fünf Ordnungselemente 115 auf, die jeweils einen elastisch verformbaren Hakenabschnitt zum Verschließen der Aufnahmekammer 118 aufweisen. Weitere Ordnungssegmente können auch unterschiedlich ausgestaltete Aufnahmekammern 18, 118 aufweisen, insbesondere unterschiedlich große Aufnahmekammern 18, 118, beispielsweise eine oder mehrere größere Aufnahmekammern 18 identisch oder ähnlich wie das Ordnungssegment 9 und eine oder mehrere kleinere Aufnahmekammern 118 identisch oder ähnlich wie das Ordnungssegment 7. In einer Ausführungsart beträgt die Längserstreckung der einzelnen Aufnahmekammern 18, 118 mindestens 5 %, insbesondere mindestens 8 % und vorzugsweise mindestens 10 % der gesamten Längserstreckung des Ordnungssegments 7, 9. Bei der weiteren Komponente 10 des Montagesystems 1 handelt es sich um ein Kantenschutzelement. Die Ordnungssegmente 7, 9 weisen ebenso wie die weitere Komponente 10 eine übereinstimmende Länge von im Ausführungsbeispiel 50 mm auf.

Die Fig. 4 zeigt eine perspektivische Ansicht auf einen Montagesteg 103 mit einem durch ein Aneinanderreihen von Ordnungssegmenten 11 gebildeten und in die Nut 13 eingesetzten Ordnungsmittel 108. Ein Ordnungssegment 11 wurde dabei durch zwei Schnitte an den Sollbruchstellen 16 vereinzelt und durch Einsetzen eines Werkzeuges 33, beispielsweise der Klinge eines Schlitz-Schraubendrehers, kann das vereinzelte Ordnungssegment 11 gelöst und von dem Montagesteg 103 entnommen werden.

Die Fig. 5 zeigt eine perspektivische Ansicht auf den Montagesteg 103 der Fig. 4, wobei anstelle des in der Fig. 4 gelösten Ordnungssegments 11 ein Ordnungssegment 9 mit zwei großen Aufnahmekammern 18 eingesetzt ist, in die ein Bündel von Verbindungsleitungen 34 bzw. eine Verbindungsleitung 35 mit großem Querschnitt eingesetzt sind.

Zur besseren Fixierung der Verbindungsleitungen 34, 35 weist das Ordnungssegment 9 einen quer zur Längsrichtung vorspringenden, insbesondere auf die Vorderseite des Montagesteges 103 mit der Tragschiene 6 vorspringenden Halteabschnitt 36 auf. Das Ordnungssegment 9 weist für jede Aufnahmekammer 18 einen Halteabschnitt 36 auf. Der Halteabschnitt 36 ist an seinem freien Ende T-förmig ausgebildet zur besseren Fixierung eines Haltemittels 37, bei dem es sich um einen Kabelbinder handeln kann.

Die Figuren 6, 9 und 12 zeigen die Ordnungssegmente 7, 9 sowie die weitere Komponente 10 in einer Ansicht. Das Ordnungssegment 9 und die weitere Komponente 10 sind unlösbar an dem Montagesteg 3 festlegbar, weshalb diese Komponenten 9, 10 keine Werkzeugangriffsfläche 14 aufweisen.

Die Fig. 7 zeigt einen Schnitt durch einen Montagesteg 103 mit einem daran festgelegten Ordnungssegment 7. Die Fig. 8 zeigt in vergrößerter Darstellung einen Ausschnitt aus der Fig. 7 im Bereich der Verbindung des Ordnungssegments 7 mit dem Montagesteg 103. Die sich entlang der Längsachse des Montagesteges 103 erstreckende und einstückig von dem Montagesteg 103 ausgebildete Aufnahmeeinrichtung 20, in welche das Ordnungssegment 7 einsteckbar ist, weist neben der Nut 13, deren Seitenwände mehrere sich in Längsrichtung des Montagesteges 103 erstreckende weitere Nuten 21 oder Riffelungen aufweisen, auf einer Außenseite der Aufnahmeeinrichtung 20 zwei Rastflanken 22, 23 auf, die sich in Längsrichtung des Montagesteges 103 erstrecken und einstückig von diesem ausgebildet sind. Insbesondere sind die beiden Rastmittel 22, 23 auf einer Außenseite einer die Nut 13 begrenzenden Wand 24 gebildet, die in lateraler Richtung gegenüber der gegenüberliegenden und die Nut 13 ebenfalls begrenzenden Wand 25 zurückversetzt ist. Auf der Außenseite weist die Wand 24 eine schräg zur Einsteckrichtung des Ordnungssegments 7 und insbesondere schräg zur Nut 13 verlaufende Fläche auf. Durch die Schrägstellung ist ein Auslenken des Rastmittels 26 beim Einstecken des Ordnungssegments 7 mit geringer Einsteckkraft möglich.

Das Ordnungssegment 7, das eine Komponente erster Art des Montagesystems 1 bildet, weist ein zugehöriges Rastmittel 26 auf, das durch einen im unverformten Ausgangszustand nahezu parallel zu dem Festlegeabschnitt 12 verlaufenden, aber diesem gegenüber federelastisch auslenkbaren Schenkel gebildet ist, nahe dessen freiem Ende eine Rastflanke 27 erster Art gebildet ist, die mit der Richtung 28 der Zugkraft einen Winkel 29 von mehr als 90° einschließt, und dadurch das Verrasten allein durch Zugkraft lösbar ist. Zur vereinfachten Handhabung kann die Lösekraft durch einen in die Werkzeugangriffsfläche 14 einsteckbaren Schlitz-Schraubendreher 33 aufgebracht werden.

Die Fig. 10 zeigt einen Schnitt durch einen Montagesteg 103 mit einem daran festgelegten Ordnungssegment 9. Die Fig. 11 zeigt in vergrößerter Darstellung einen Ausschnitt aus der Fig. 10 im Bereich der Verbindung des Ordnungssegments 9 mit dem Montagesteg 103. Das Ordnungselement 9 bildet eine Komponente zweiter Art des Montagesystems 1 mit einem zugehörigen Rastmittel 126, das eine Rastflanke 30 zweiter Art aufweist, die mit der Richtung 28 der Zugkraft einen Winkel von weniger als 90° einschließt und dadurch das Verrasten allein durch Zugkraft nicht lösbar ist, sondern selbsthemmend ist. Dementsprechend ist das Ordnungselement 9 mit hoher Festigkeit an dem Montagesteg 3 festgelegt, entsprechend den großen Aufnahmekammern 18 für das Einbringen großer und schwerer Verbindungsleitungen 34, 35.

Die Fig. 13 zeigt einen Schnitt durch einen Montagesteg 103 mit einer daran festgelegten weiteren Komponente 10. Die Fig. 14 zeigt in vergrößerter Darstellung einen Ausschnitt aus der Fig. 13 im Bereich der Verbindung der weiteren Komponente 10 mit dem Montagesteg 103. Bei der weiteren Komponente 10 handelt es sich um ein Kantenschutzelement, das auf seiner von dem Montagesteg 103 wegweisenden Oberfläche eine sich über einen Winkelbereich von 180° erstreckende konvexe, aber von der Kreisform abweichende Oberfläche 32 aufweist. Die weitere Komponente 10 kann beispielsweise als Extrusionsteil aus einem Kunststoff hergestellt sein und individuell auf die gewünschte Länge abgelängt sein. Die weitere Komponente 10 weist keine Werkzeugangriffsfläche 14 auf, so dass eine Lösbarkeit der Verrastung durch eine Zugkraft in Richtung 28 zwar grundsätzlich möglich ist, aber aufgrund des verwendeten Werkstoffes und der konstruktiven Ausgestaltung manuell nicht oder nur mit großem Kraftaufwand möglich ist. Dies soll verhindern, dass die weitere Komponente 10 versehentlich von dem Montagesteg 103 gelöst werden kann.

In einer Ausführungsart ist bei jenen Ordnungssegmenten 7, 11 oder Komponenten, bei welchen in dem am Montagesteg 3, 103 festgelegten Zustand die Werkzeugangriffsfläche 14 sichtbar ist, das Verrasten nichtselbsthemmend sondern allein durch Zugkraft lösbar, insbesondere weisen jene Ordnungssegmente 7, 11 ein Rastmittel 26 mit einer Rastflanke 27 erster Art auf, durch die das Verrasten allein durch Zugkraft lösbar ist.

Die Fig. 15 und 16 zeigen eine Seitenansicht auf einen Montagesteg 203 nach dem Stand der Technik bzw. auf eine Schalttafel 303 nach dem Stand der Technik, die jeweils eine Tragschiene 6 mit einer Höhe von beispielsweise 7,5 mm aufweisen. Bedingt durch die relativ geringe Höhe der Tragschiene 6 sind Einrichtungen 2 mit einer vergleichsweise großen Bauhöhe nicht festlegbar, sondern allenfalls Einrichtungen 102, die zumindest einseitig eine reduzierte Bauhöhe aufweisen. Um das Problem zu lösen, auch bei Tragschienen 6 mit einer vergleichsweise geringen Bauhöhe große Einrichtungen 2 festlegen zu können, weist ein vorzugsweise symmetrisch zu einer Mittelebene 40 aufgebauter Montagesteg 3 neben einem ersten vorzugsweise mittigen Abschnitt 41, in dem auch die Tragschiene 6 ausgebildet ist, einen von der Tragschiene 6 beabstandeten dritten Abschnitt 43 auf, der einen größeren Höhenabstand 44 von dem Fußpunkt 39 der Tragschiene 6 aufweist als ein zwischen dem ersten Abschnitt 41 und dritten Abschnitt 43 angeordneter zweiter Abschnitt 42 an seinem der Tragschiene 6 nahen, insbesondere an seinem an die Tragschiene 6 angrenzende Ende.

Im Ausführungsbeispiel der Fig. 17 und 18 wird dies durch eine konvexe Krümmung des Montagesteges 3 insbesondere in seinem zweiten Abschnitt 42 erreicht. Die konvexe Krümmung erstreckt sich über einen Winkelbereich von etwa 15°, und der Radius der konvexen Krümmung beträgt etwa das Vierfache der lateralen Erstreckung des gekrümmten zweiten Abschnitts 42. Der Höhenabstand 44 zwischen einem dem dritten Abschnitt 43 zugewandten Ende des zweiten Abschnitts 42 und einem dem ersten Abschnitt 41 zugewandten Ende des zweiten Abschnitts 42 entspricht dabei ungefähr der Höhe 45 der Tragschiene 6, so dass die Gesamthöhe 46 für das Anbringen der Einrichtung 2 an der Tragschiene 6 etwa das Doppelte der Höhe 45 der Tragschiene 6 beträgt. Wie die Figuren 17 und 18 zeigen, sind trotz der relativ geringen Höhe 45 der Tragschiene 6 problemlos Einrichtungen 2 mit großer Bauform an dem Montagesteg 3 festlegbar.

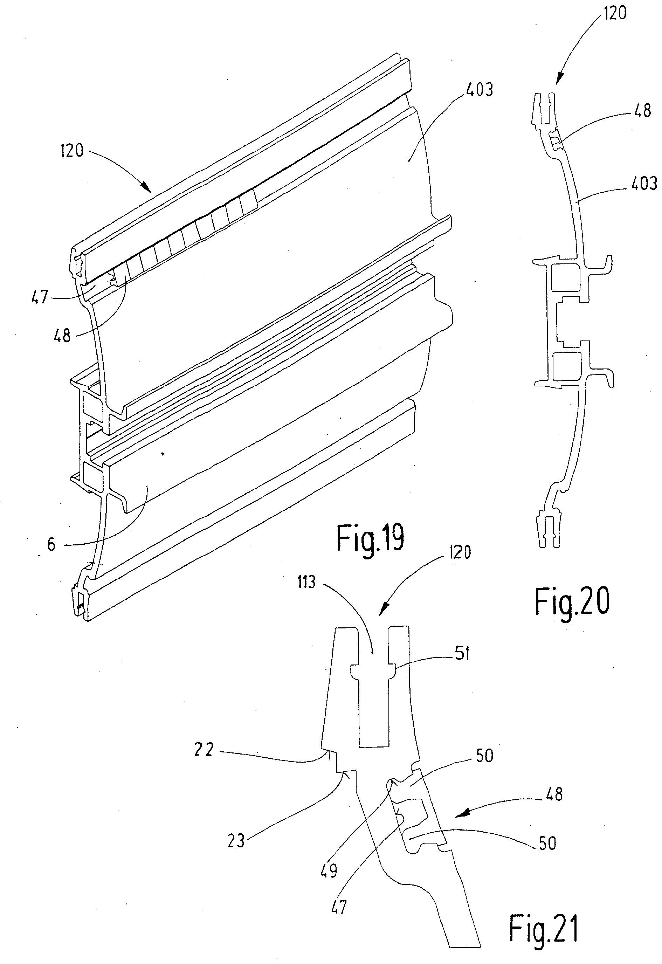

Die Fig. 19 zeigt eine perspektivische Ansicht auf einen Montagesteg 403. Die Fig. 20 zeigt eine Seitenansicht auf den Montagesteg 403 der Fig. 19. Die Fig. 21 zeigt einen Ausschnitt aus der Fig. 20 in vergrößerter Darstellung im Bereich einer von dem Montagesteg 403 einstückig ausgebildeten Nut 47 zum lösbar rastenden Einsetzen von Bezeichnungsschildern 48. Die Nut 47 weist dabei beidseitig einen Hinterschnitt 49 auf, in den jeweils ein federelastisch auslenkbarer Schenkel 50 des Bezeichnungsschilds 48 rastend eingreift. Die Nut 47 ist im Bereich des dritten Abschnitts 43 des Montagesteges 403 angeordnet oder in einem vom ersten Abschnitt 41 fernen Ende des zweiten Abschnitts 42 des Montagesteges 403. Dadurch ist gewährleistet, dass auch bei an dem Montagesteg 403 festgelegter Einrichtung 2 das Bezeichnungsschild 48 ablesbar ist. Das Bezeichnungsschild 48 kann beispielsweise eine Verbindungsleitung 35, 36 kennzeichnen, die benachbart zu dem Bezeichnungsschild 48 von der Rückseite auf die Vorderseite des Montagesteges 403 geführt ist, oder eine im Bereich des Bezeichnungsschilds 48 an der Tragschiene angeordnete Einrichtung 2.

In die Aufnahmeeinrichtung 120 sind Ordnungsmittel 8 oder sonstige Komponenten 10 des Montagesystems 1 einsetzbar, insbesondere in die Einstecknut 113 einsteckbar. Mindestens eine der Wände, welche die Einstecknut 113 begrenzen, weist eine oder mehrere, sich vorzugsweise in Längsrichtung der Einstecknut 113 erstreckende Vertiefungen 51 oder Riffelungen auf, beispielsweise zum unlösbaren Verrasten einer in die Aufnahmeeinrichtung 120 einsetzbaren bzw. in die Einstecknut 113 einsteckbaren Komponente des Montagesystems 1. Außenseitig weist auch die Aufnahmeeinrichtung 120 eine erste Rastflanke 22 und eine zweite Rastflanke 23 auf, wobei die erste nicht hemmende Rastflanke 22 einen geringeren Abstand von dem freien Ende der Aufnahmeeinrichtung 120 aufweist gegenüber der hemmenden zweiten Rastflanke 23.

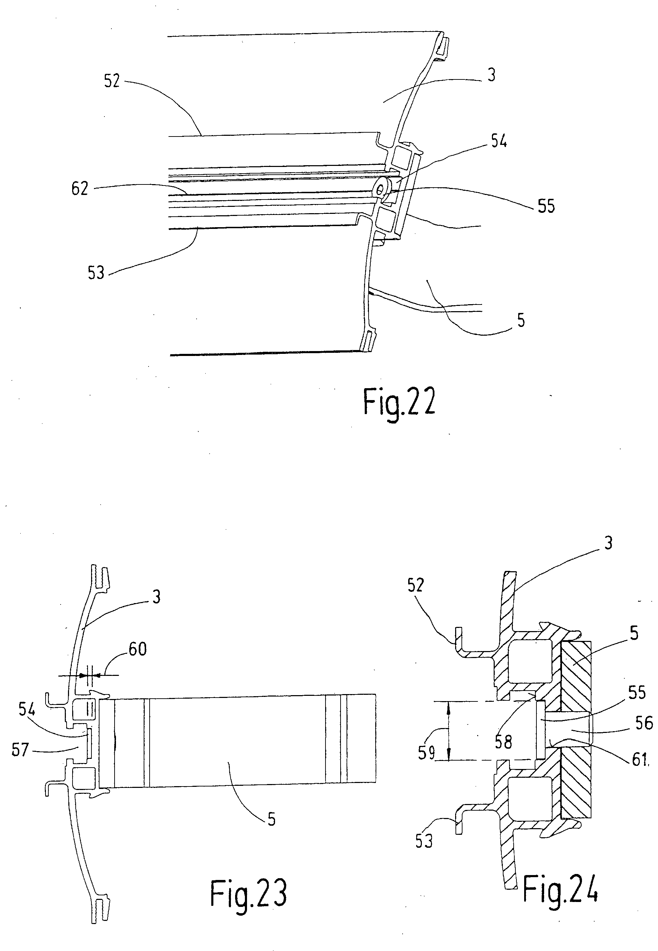

Die Fig. 22 zeigt eine perspektivische Ansicht auf ein Ende des Montagesteges 3 mit der Verbindung mit dem Montagebügel 5. Die Fig. 23 zeigt eine Seitenansicht auf den Montagesteg 3 der Fig. 22, und die Fig. 24 zeigt einen Ausschnitt der Fig. 23 in vergrößerter Darstellung im Bereich der Verbindung zwischen Montagesteg 3 und Montagebügel 5. Der Montagesteg 3 weist zwischen den beiden Tragschenkeln 52, 53 der Tragschiene 6 eine in Längsrichtung des Montagesteges 3 und vorzugsweise mittig verlaufende Nut 54 auf, die einen Kopf 55 eines Verbindungsmittels 56, insbesondere den Kopf einer Flachkopfschraube aufnimmt. Dadurch ragt der Kopf 55 in einem den Montagesteg 3 mit dem Montagebügel 5 verbundenen Zustand nicht in den Bereich zwischen den beiden Tragschenkeln 52, 53 hinein und behindert dadurch nicht das Anbringen der Einrichtung 2.

Im Ausführungsbeispiel weist der Montagesteg 3 zwischen den beiden Tragschenkeln 52, 53 einen in Längsrichtung des Montagesteges 3 verlaufenden Gleitmutterkanal 57 auf. Die Nut 54 ist in die Bodenfläche 58 des Gleitmutterkanals 57 eingebracht. Der Kopf 55 des Verbindungsmittels 56 ragt im verbundenen Zustand nicht über die Bodenfläche 58 des Gleitmutterkanals 57 hinaus bzw. nicht in den Gleitmutterkanal 57hinein. Dadurch ist auch bei montiertem Verbindungsmittel 56 das Einbringen einer oder mehrerer Gleitmuttern in den Gleitmutterkanal 57 möglich, insbesondere auch in einen beidseitig von Verbindungsmitteln 56 begrenzten Abschnitt des Gleitmutterkanals 57.

Die Breite 59 der Nut 54 ist weniger als 50 % größer als die Breite des Kopfes 55 des Verbindungsmittels 56, insbesondere weniger als 25 % und vorzugsweise weniger als 10 %. Die Tiefe 60 der Nut 54 ist weniger als 50 % größer als die Höhe des Kopfes 55 des Verbindungsmittels 56, insbesondere weniger als 25 % und vorzugsweise weniger als 10 %. Die Breite 59 der Nut 54 beträgt weniger als 90 % der Breite des Gleitmutterkanals 57, insbesondere weniger als 80 % und im Ausführungsbeispiels etwa 75 %. Die Breite 59 der Nut 54 entspricht etwa der Breite der den Tragschenkeln 52, 53 zugewandten Öffnung des Gleitmutterkanals 57. Die Tiefe 60 der Nut 54 beträgt weniger als 150 % der Tiefe des Gleitmutterkanals 57, insbesondere weniger als 100 % und vorzugsweise weniger als 50 %.

Das Verbindungsmittel 56 ist im Ausführungsbeispiel eine Flachkopfschraube, die in eine Durchgangsbohrung 61 im Montagesteg 3 eingesetzt ist und in eine Gewindebohrung des Montagebügels 5 eingeschraubt ist. Die Durchgangsbohrung 61 kann wahlfrei an einer für die Verbindung des Montagesteges 3 mit dem Montagebügel 5 geeigneten Stelle in den Montagesteg 3 eingebracht werden. Hierzu weist der Montagesteg 3 als Zentrierhilfe eine mittig in der Bodenfläche der Nut 54 eingebrachte, sich in Längsrichtung des Montagesteges 3 erstreckende und vorzugsweise V-förmige Rinne 62 auf.

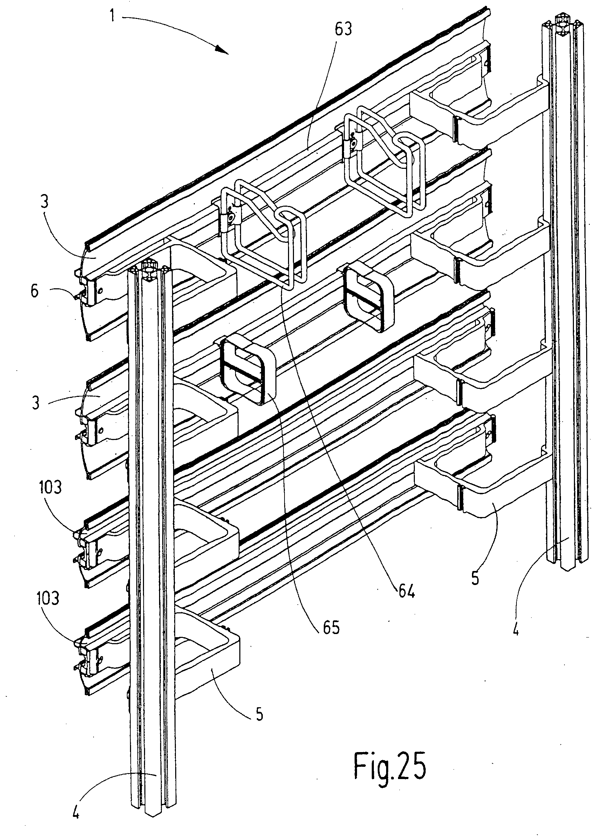

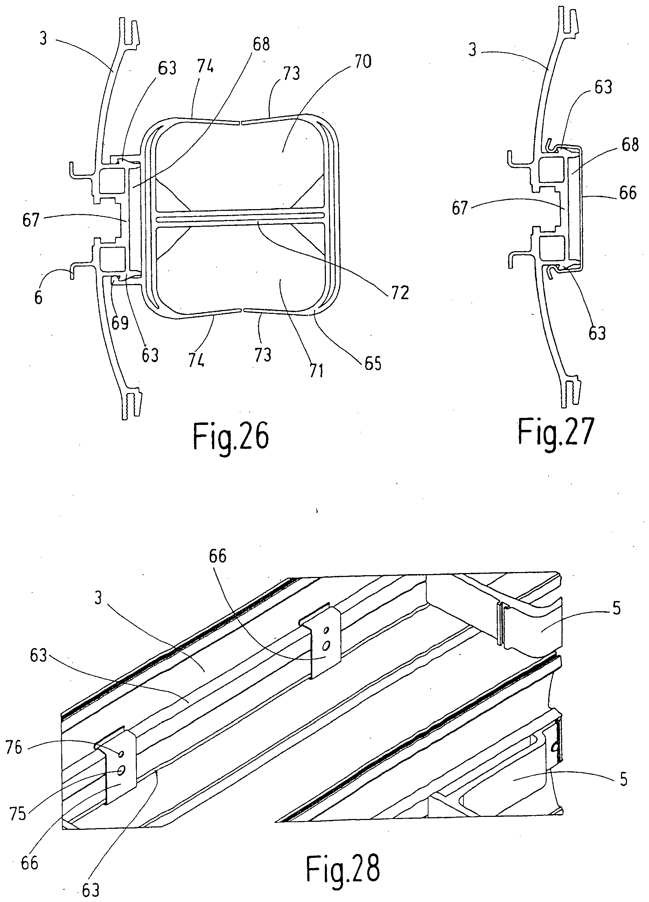

Die Fig. 25 zeigt eine perspektivische Ansicht auf die Rückseite des Montagesystems 1 der Fig. 1. Der Montagesteg 3 weist auf seiner der Tragschiene 6 gegenüberliegenden Rückseite mindestens einen sich in Längsrichtung des Montagesteges 3 erstreckenden Raststeg 63 auf, auf den weitere Komponenten 64, 65 des Montagesystems 1 unmittelbar aufrastbar sind oder mittelbar unter Verwendung eines aufrastbaren Adapterelements 66 (Fig. 27) festlegbar sind.

Die Fig. 26 zeigt eine Seitenansicht auf den Montagesteg 3 der Fig. 25. Der Montagesteg 3 weist in seinem mittleren Bereich auf der Rückseite zwei parallel verlaufende Raststege 63 auf, deren freie Enden gegenüber einem Verbindungssteg 67 vorspringen und dadurch eine Nut 68 bzw. einen Aufnahmeraum begrenzen, in den beispielsweise entweder der Montagebügel 5 eingelegt werden kann oder ein Verbindungselement eingreifen kann, beispielsweise ein Verbindungselement zum Verbinden einer weiteren Komponente 64 mit dem Adapterelement 66. Die Raststege 63 sind einstückig vom Montagesteg 3 ausgebildet.

Die Raststege 63 weisen eine selbsthemmende Rastkante 80 (Fig. 32) auf, insbesondere eine Rastkante 80 mit Hinterschnitt 81. Die beiden Raststege 63 verlaufen voneinander beabstandet aber parallel zueinander im Bereich der auf der Vorderseite angeordneten Tragschiene 6. Auf die Raststege 63 ist eine erste weitere Komponente 65 zum Bündeln von auf der Rückseite des Montagesteges 3 verlaufenden Verbindungsleitungen 34, 35 der auf der Vorderseite angeordneten Einrichtung 2 aufgerastet, die neben einem auf die Raststege 3 aufrastbaren Verbindungsabschnitt 69 auch zwei Bündelkammern 70, 71 aufweist für die Aufnahme von Verbindungsleitungen 34, 35. Die Bündelkammern 70, 71 sind symmetrisch zu einer Mittelebene, ebenso wie die doppelwandige Trennwand 72. Die beiden Bündelkammern 70, 71 sind jeweils über zwei federelastisch auslenkbare Schenkel 73, 74 von außen zugänglich, wobei die Schenkel 73, 74 auf einander gegenüberliegenden und an den Verbindungsabschnitt 69 angrenzenden Seiten angeordnet sind.

Die Fig. 27 zeigt eine Seitenansicht auf einen Montagesteg 3 mit einem auf die Raststege 63 aufgerasteten Adapterelement 66. Die Fig. 28 zeigt eine perspektivische Ansicht auf die Rückseite des Montagesteges 3 mit zwei aufgerasteten Adapterelementen 66. Das Adapterelement 66 weist eine vorzugsweise mittig angeordnete Bohrung 75 auf, die als Gewindebohrung ausgeführt sein kann oder ein angerolltes Gewinde, einen Gewindedurchzug, eine Einpressmutter oder dergleichen aufweisen kann, und eine oder mehrere, vorzugsweise exzentrisch angeordnete weitere Bohrungen 76 auf, die eine mechanische Schnittstelle für das Anbringen weiterer Komponenten des Montagesystems 1 auf der Rückseite des Montagesteges 3 bilden können. Die weitere Bohrung 76 kann beispielsweise ein Positioniermittel für das Anbringen weiterer Komponenten bilden, beispielsweise zum Einsetzen eines zugehörigen Positioniermittels der weiteren Komponente. Die Bohrungen 75, 76 korrespondieren mit dem durch das Adapterelement 66, die beiden Raststege 63 und den Verbindungssteg 67 begrenzten Aufnahmeraum 68.

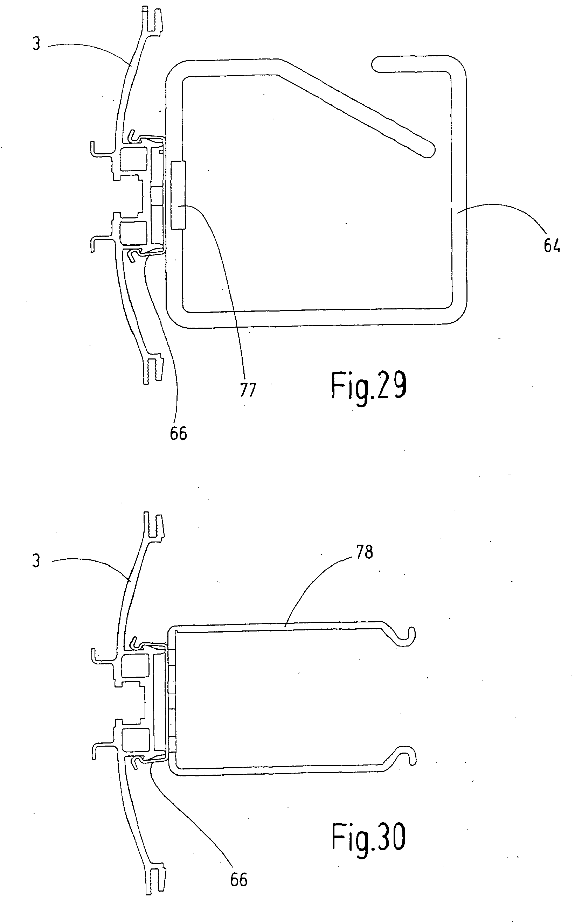

Die Fig. 29 zeigt eine zweite weitere Komponente 64 des Montagesystems 1, bei der es sich um ein weiteres Bündelelement zum Bündeln von Versorgungsleitungen 34, 35 handelt. Die zweite weitere Komponente 64 ist ein zweispuriges Drahtbiegeteil, das mittels eines mit dem Adapterelement 66 verschraubten Befestigungselements 77 klemmend an dem Adapterelement 66 festgelegt ist. Durch teilweises Lösen des Befestigungselements 77 wird die zweite weitere Komponente 64 zwar noch gehalten, ist aber gegenüber dem Adapterelement 66 entlang der beiden parallel zueinander verlaufenden Drahtspuren bewegbar und anschließend wieder klemmbar, so dass die gewünschte Position der zweiten weiteren Komponente 64 in Bezug auf das an den Raststegen 63 fixierte Adapterelement 66 bzw. den Montagesteg 3 einstellbar ist.

Die Fig. 30 zeigt eine Seitenansicht des Montagesteges 3 mit einem auf der Rückseite mittels des Adapterelements 66 auf den Montagesteg 3 aufgerasteten Kabelkanal 78.

Die Fig. 31 zeigt eine perspektivische Ansicht auf ein weiteres Beispiel eines Montagesystems 101, bei dem mindestens ein Montagesteg 403 an oder nahe seinen beiden Enden über ein Verbindungselement 79 mit jeweils einem vertikal verlaufenden Profilstab 4 verbunden ist. Das Verbindungselement 79 ist dabei aus einem Abschnitt eines Profils gebildet, aus dem auch der Profilstab 4 hergestellt ist. Alternativ kann auch ein sonstiges Distanzstück verwendet werden, beispielsweise ein Profilstück mit kleineren Querschnittsabmessungen oder auch eine auf den gewünschten Abstand des Montagesteges 403 von dem Profilstab 4 abgelängte Stange. Der Kopf 55 der Schraube, mittels welcher der Montagesteg 403 mit dem Verbindungselement 79 verbunden ist, liegt versenkt in der Nut 54 im Gleitmutterkanal 57.

Die Fig. 32 zeigt eine Seitenansicht auf ein weiteres Beispiel eines Montagesteges 503, der mittels eines Verbindungselements 79 an einem Profilstab 4 festlegbar ist. Das im Querschnitt vorzugsweise quadratische Verbindungselement 79 weist eine Kantenlänge auf, die dem Abstand der beiden Raststege 63 entspricht oder geringfügig kleiner ist, so dass die Raststege 63 durch einen Formschluss eine Führung beim Einsetzen des Verbindungselements 79 in den durch die Raststege 63 begrenzten Aufnahmeraum 68 (Fig. 27) bilden. Auch wenn anstelle des Verbindungselements 79 ein sonstiges Distanzstück verwendet wird, ist es vorteilhaft, wenn auch dieses einen Formschluss mit den Raststegen 63 aufweist, beispielsweise im Fall einer im Querschnitt runden oder verrundete Ecken aufweisenden Distanzstange, wenn diese mindestens an ihrem dem Montagesteg 503 zugewandten Endabschnitt zwei einander gegenüberliegende abgeflachte Seiten aufweist, deren Abstand dem Abstand der Raststege 63 entspricht.

Der Montagesteg 503 weist ebenso wie die zuvor beschriebenen Ausführungsbeispiele eine Aufnahmeeinrichtung 120 für Ordnungsmittel 8 oder weitere Komponenten 10 sowie einen Gleitmutterkanal 57 mit Nut 54 auf, aber der Montagesteg 503 weist keine Tragschiene 6 auf. Vielmehr werden die Einrichtungen 2 mittels Schrauben an dem Montagesteg 503 festgelegt, die mit im Gleitmutterkanal 57 angeordneten und dort verschiebbaren Muttern verschraubbar sind. Die nach beiden Seiten an den Gleitmutterkanal 57 anschließenden Abschnitte des Montagesteges 503 sind plan, beispielsweise für eine großflächige Anlage der festzulegenden Einrichtung 2. Die dem Gleitmutterkanal 57 abgewandten Enden der planen Abschnitte sind rechtwinklig abgebogen und bilden abschließend jeweils eine Aufnahmeeinrichtung 120 aus, die gegenüber der durch die planen Abschnitte bestimmten Ebene zurückversetzt sind.

Die Fig. 33 zeigt eine Seitenansicht auf ein weiteres Beispiel eines Montagesteges 603, der mittels eines Verbindungselements 79 an einem Profilstab 4 festlegbar ist. Der Montagesteg 603 weist auf seiner Vorderseite eine konvexe Krümmung auf, an deren Position größter Vorwölbung eine Tragschiene 6 angeordnet ist. Während die Tragschiene 6 und auch der Gleitmutterkanal 57 mit der Nut 54 symmetrisch zu einer Mittelebene 40 sind, ist das Profil des Montagesteges 603 unsymmetrisch zu dieser Mittelebene 40. Der auf der einen Seite an die Tragschiene 6 anschließende und an der Aufnahmeeinrichtung 120 endende zweite Abschnitt 142 weist in lateraler Richtung eine größere Erstreckung auf als der auf der anderen Seite an die Tragschiene 6 anschließende zweite Abschnitt 242. Demgegenüber ist der Höhenabstand 44, den die beiden zweiten Abschnitte 142, 242 überstreichen, übereinstimmend.

## Patentansprüche

1. Montagesystem (1) für die Anordnung von beispielsweise elektrischen Einrichtungen (2) in Schaltschränken, wobei das Montagesystem (1) mindestens einen vorzugsweise horizontal verlaufenden Montagesteg (3) aufweist, an dessen Vorderseite mindestens eine Einrichtung (2) anbringbar ist, wobei der Montagesteg (3) auf seiner der anbringbaren Einrichtung (2) gegenüberliegenden Rückseite mindestens einen sich in Längsrichtung des Montagesteges (3) erstreckenden Raststeg (63) aufweist, auf den eine weitere Komponente (64, 65) des Montagesystems (1) unmittelbar aufrastbar oder mittelbar unter Verwendung eines aufrastbaren Adapterelements (66) festlegbar ist, wobei das Montagesystem (1) eine erste weitere Komponente (65) zum Bündeln von auf der Rückseite des Montagesteges (3) verlaufenden Verbindungsleitungen (34, 35) der auf der Vorderseite angeordneten Einrichtung (2) umfasst, und wobei die erste weitere Komponente (65) einstückig sowohl einen auf den Raststeg (63) aufrastbaren Verbindungsabschnitt (69) als auch mindestens eine Bündelkammer (70, 71) für die Aufnahme der Verbindungsleitungen (34, 35) aufweist, **dadurch gekennzeichnet, dass** die erste weitere Komponente (65) einstückig mehrere Bündelkammern (70, 71) zum Bündeln von auf der Rückseite des Montagesteges (3) verlaufenden Verbindungsleitungen (34, 35) aufweist, und dass die Bündelkammern (70, 71) symmetrisch zu einer Symmetrieebene (40) des Montagesteges (3) angeordnet sind.

2. Montagesystem (1) nach Anspruch 1, **dadurch gekennzeichnet, dass** der Raststeg (63) einstückig von dem Montagesteg (3) ausgebildet ist.

3. Montagesystem (1) nach einem der vorangehenden Ansprüche, **dadurch gekennzeichnet, dass** der Raststeg (63) mindestens eine selbsthemmende Rastkante aufweist, insbesondere eine Rastkante mit Hinterschnitt.

4. Montagesystem (1) nach einem der vorangehenden Ansprüche, **dadurch gekennzeichnet, dass** der Montagesteg (3) zwei lateral in Bezug auf die Längsachse des Montagesteges (3) voneinander beabstandete, aber parallel zueinander verlaufende Raststege (63) aufweist, auf welche die weitere Komponente (65) des Montagesystems (1) oder das Adapterelement (66) klammerartig aufrastbar ist, insbesondere unter Umgreifen der Raststege (63) aufrastbar ist.

5. Montagesystem (1) nach Anspruch 4, **dadurch gekennzeichnet, dass** die beiden Raststege (63) symmetrisch zu einer Symmetrieebene, insbesondere zu einer Mittelebene (40) des Montagesteges (3), angeordnet sind, die auch eine Symmetrieebene für eine auf der Vorderseite des Montagesteges (3) angeordnete Tragschiene (6) und/oder für einen auf der Vorderseite des Montagesteges (3) angeordneten Gleitmutterkanal (57) bildet.

6. Montagesystem (1) nach Anspruch 1, **dadurch gekennzeichnet, dass** die Bündelkammer (70, 71) durch mindestens einen federelastisch auslenkbaren Schenkel (73, 74) begrenzt ist, durch dessen Auslenkung Verbindungsleitungen (34, 35) in die Bündelkammer (70, 71) einführbar und dort haltbar sind.

7. Montagesystem (1) nach einem der vorangehenden Ansprüche, **dadurch gekennzeichnet, dass** das Montagesystem (1) ein Adapterelement (66) umfasst, das auf den Raststeg (63) aufrastbar ist und das eine mechanische Schnittstelle (75, 76) für das Anbringen weiterer Komponenten (64, 78) des Montagesystems (1) auf der Rückseite des Montagesteges (3) aufweist.

8. Montagesystem (1) nach Anspruch 7, **dadurch gekennzeichnet, dass** zwischen dem Adapterelement (66) und dem Raststeg (63) ein Aufnahmeraum (68) gebildet ist für die Aufnahme eines Befestigungsmittels zum Befestigen der weiteren Komponente (64, 78) des Montagesystems (1) an dem Adapterelement (66).

## Claims

1. Mounting system (1) for the arrangement, for example, of electrical devices (2) in switch cabinets, wherein the mounting system (1) having at least one preferably horizontally extending support strip (3) to the front of which at least one device (2) can be attached, wherein the support strip (3) has on its rear side opposite the attachable device (2) at least one locking sleeve (63) extending in the longitudinal direction of the support strip (3), onto which a further component (64, 65) of the mounting system (1) can be fixed directly or indirectly using a snap-on adapter element (66), wherein the mounting system (1) comprising a first further component (65) for bundling connecting lines (34, 35) extending on the rear side of the support strip (3) of the device (2) arranged on the front side, and wherein the first further component (65) integrally comprises both a connecting section (69) which can be snapped onto the locking sleeve (63) and at least one bundling chamber (70, 71) for receiving the connecting lines (34, 35), **characterised in that** the first further component (65) has in one piece several bundle chambers (70, 71) for bundling connecting lines (34, 35) running on the rear side of the support strip (3), and that the bundle chambers (70, 71) are arranged symmetrically to a plane of symmetry (40) of the support strip (3).

2. Assembly system (1) according to Claim 1, **characterised in that** the locking sleeve (63) is formed in one piece from the support strip (3).

3. Mounting system (1) according to one of the preceding Claims, **characterised in that** the locking sleeve (63) has at least one self-locking edge, in particular a decent edge with undercut.

4. Assembly system (1) according to one of the preceding requirements, **characterised in that** the support strip (3) has two locking sleeves (63) which are spaced apart laterally with respect to the longitudinal axis of the support strip (3) but extend parallel to one another, onto which the further component (65) of the assembly system (1) or the adapter element (66) can be snapped in the manner of a clip, in particular by engaging around the locking sleeves (63).

5. Assembly system (1) according to Claim 4, **characterised in that** the two locking sleeves (63) are arranged symmetrically to a plane of symmetry, in particular to a central plane (40) of the support strip (3), which also forms a plane of symmetry for a support rail (6) arranged on the front side of the support strip (3) and / or for a slide nut channel (57) arranged on the front side of the support strip (3).

6. Assembly system (1) according to Claim 1, **characterised in that** the bundle chamber (70, 71) is limited by at least one spring-elastically deflectable leg (73, 74), by the deflection of which connecting lines (34, 35) can be introduced into the bundle chamber (70, 71) and remain there.

7. Mounting system (1) according to one of the preceding Claims, **characterised in that** the support strip (1) comprises an adapter element (66) which can be snapped onto the locking sleeve (63) and which has a mechanical interface (75, 76) for attaching further components (64, 78) of the support strip (1) on the rear side of the support strip (3).

8. Mounting system (1) according to Claim 7, **characterised in that** a receiving space (68) is formed between the adapter element (66) and the locking sleeves (63) for receiving a fastening part with the purpose of fastening further components (64, 78) of the support strip (1) to the adapter element (66).

## Revendications

1. Système (1) d'assemblage pour monter par exemple des dispositifs (2) électriques dans des armoires de commande, le système (1) d'assemblage comportant au moins une barrette (3) d'assemblage qui s'étend de préférence horizontalement et sur la face avant de laquelle au moins un dispositif (2) peut être monté, la barrette (3) de montage comportant sur sa face arrière opposée au dispositif (2) pouvant être monté au moins une barrette (63) d'encliquetage, qui s'étend dans la direction longitudinale de la barrette (3) de montage et à laquelle peut être fixé un élément (64, 65) supplémentaire du système (1) d'assemblage, de manière directement encliquetable ou indirectement en utilisant un élément (66) adaptateur encliquetable, le système (1) d'assemblage comprenant un premier élément (65) supplémentaire pour mettre en paquet des lignes (34, 35) de liaison, s'étendant sur la face arrière de la barrette (3) d'assemblage, du dispositif (2) disposé sur la face avant, et le premier élément (65) supplémentaire comportant d'un seul tenant aussi bien une partie (69) de liaison pouvant être encliquetée sur la barrette (63) d'encliquetage qu'au moins une chambre (70, 71) de paquet pour la réception des lignes (34, 35) de liaison, **caractérisé en ce que** le premier élément (65) supplémentaire comporte d'un seul tenant plusieurs chambres (70, 71) de paquet pour mettre en paquet les lignes (34, 35) de liaison s'étendant sur la face arrière de la barrette (3) d'assemblage, et **en ce que** les chambres (70, 71) de paquet sont disposées symétriquement par rapport à un plan (40) de symétrie de la barrette (3) d'assemblage.

2. Système (1) d'assemblage suivant la revendication 1, **caractérisé en ce que** la barrette (63) d'encliquetage est formée d'un seul tenant avec la barrette (3) d'assemblage.

3. Système (1) d'assemblage suivant l'une des revendications précédentes, **caractérisé en ce que** la barrette (63) d'encliquetage comprend au moins une arête d'encliquetage autoblocante, notamment une arête d'encliquetage à contre dépouille.

4. Système (1) d'assemblage suivant l'une des revendications précédentes, **caractérisé en ce que** la barrette (3) d'assemblage comporte deux barrettes (63) d'encliquetage, qui s'étendent à distance l'une de l'autre latéralement par rapport à l'axe longitudinal de la barrette (3) d'assemblage, mais parallèlement l'une à l'autre et sur laquelle l'élément (65) supplémentaire du système (1) d'assemblage ou l'élément (66) adaptateur peut être encliqueté à la façon d'une agrafe, notamment en enveloppant les barrettes (63) d'encliquetage.

5. Système (1) d'assemblage suivant la revendication 4, **caractérisé en ce que** les deux barrettes (63) d'encliquetage sont disposées symétriquement par rapport à un plan de symétrie, notamment par rapport à un plan (40) médian de la barrette (3) d'assemblage, qui forme aussi un plan de symétrie pour un rail (6) de support disposé sur la face avant de la barrette (3) d'assemblage et/ou pour un canal (57) d'écrou coulissant ménagé sur la face avant de la barrette (3) d'assemblage.

6. Système (1) d'assemblage suivant la revendication 1, **caractérisé en ce que** la chambre (70, 71) de paquet est délimité par au moins une branche (73, 74), qui peut être déformée élastiquement et par la déformation de laquelle des lignes (34, 35) de liaison peuvent être introduites dans la chambre (70, 71) de paquet et y être maintenues.

7. Système (1) d'assemblage suivant l'une des revendications précédentes, **caractérisé en ce que** le système (1) d'assemblage comprend un élément (66) adaptateur, qui peut être encliqueté sur la barrette (63) d'encliquetage et qui comporte une interface (75, 76) mécanique pour l'adjonction d'éléments (64, 78) supplémentaires du système (1) d'assemblage sur la face arrière de la barrette (3) d'assemblage.

8. Système (1) d'assemblage suivant la revendication 7, **caractérisé en ce qu'**il est formé entre l'élément (66) adaptateur et la barrette (63) d'encliquetage une zone (68) de réception pour la réception d'un moyen de fixation pour fixer l'élément (64, 78) supplémentaire du système (1) d'assemblage à l'élément (66) adaptateur.
